# EUROPEAN PATENT SPECIFICATION

(11) **EP 3 473 488 B1**
(45) Date of publication and mention of the grant of the patent: **09.12.2020**
(21) Application number: 18201361.5
(22) Date of filing: 18.10.2018
(51) Int. Cl.: B60L 50/40, B60L 3/00

(54) **SUPERCAPACITOR CHARGING SYSTEM**
SUPERKONDENSATORAUFLADESYSTEM
SYSTÈME DE RECHARGE DE SUPERCONDENSATEUR

(30) Priority: 18.10.2017 IT 201700117926
(43) Date of publication of application: 24.04.2019
(73) Proprietor: IVECO FRANCE S.A.S., 69200 Vénissieux (FR)
(72) Inventor: GENDRE, Guy, 69003 Lyon (FR)
(74) Representative: Bongiovanni, Simone

(56) References cited:
- FR-A1- 2 915 836
- US-A1- 2015 306 972

## Description

### TECHNICAL FIELD

The present invention relates to a supercapacitor charging system.

### BACKGROUND ART

A supercapacitor is a capacitor of a special technology which allows it to achieve an intermediate level of power density and energy density, between that of batteries and conventional electrolytic capacitors. Composed of several cells mounted in series-parallel, a supercapacitor makes possible high output voltage and current (power density of several kW/kg), stores an amount of energy between that of the two above-mentioned storage modes, and can release the energy faster than a battery can.

Supercapacitors are used in boosters which are used to start internal combustion engines.
The supercapacitor/starter combination is commercially known as a booster which makes it possible to supplement the battery when starting an engine. Boosters are thus auxiliary systems and can accordingly be charged used energy sources external to the vehicle. Charging is managed by current modulation depending on the voltage level because at very low voltage levels, the charging current can be very high, which is the main difficulty in use. This invention proposes the integration of the supercapacitor as close as possible to the starter for combined usage. The supercapacitor is sized for engine starting, so this energy must be transferred to it in a safe and relatively short time so as to be compatible with conventional usage of a vehicle.

US2015306972 describes an electrical apparatus for powering an electrical machine with two different energy sources.

FR2915836 describes an electric circuit for a vehicle.

### DISCLOSURE OF INVENTION

The present invention relates to a charging system for a supercapacitor as claimed in claim 1.

Other characteristics and benefits of the invention will become apparent from the following non-limiting description, provided for illustrative purposes, with reference to the attached drawings wherein:
- Figure 1 shows the simplified electrical circuit of a supercapacitor charging system according to the present invention; and
- Figure 2 shows the electrical circuit of Figure 1 in a different operational condition.

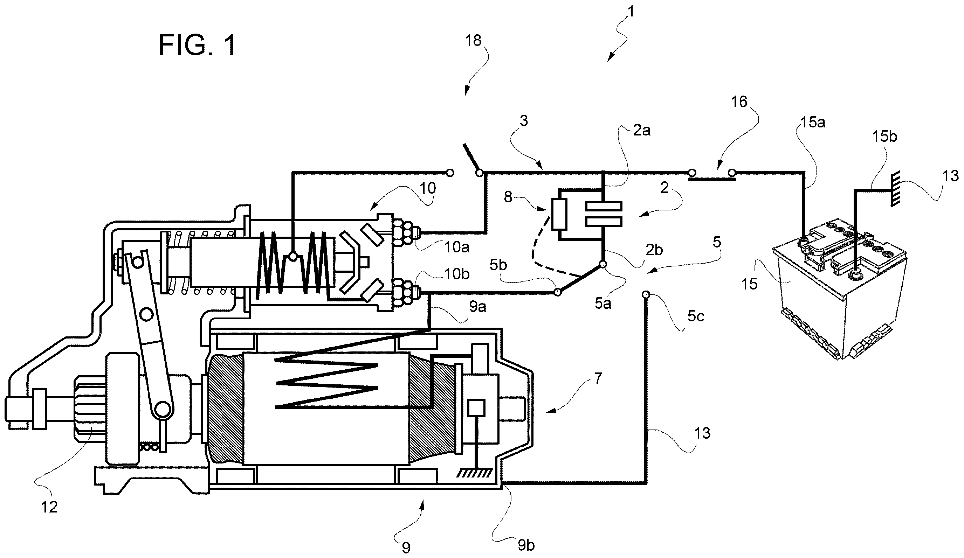

Figure 1 shows a charging system 1 for a supercapacitor which is indicated with the number 2.

The supercapacitor 2 is provided with a first terminal 2a which is connected with a first electrical power line (for example, a positive electrical power line) which is indicated with the number 3. Line 3 is a low to medium-power line (typically line 3 conducts a current of about 30 amps). Line 3 is made with a cable which has a cross-section of between 2 and 20 mm², preferably 4 mm².

A supercapacitor makes it possible to store electricity in electrostatic form with a voltage which varies exponentially depending on its charge level. It is possible to combine several supercapacitors in series to obtain the
desired voltage level and to connect them in parallel to obtain sufficient energy.

The supercapacitor 2 is provided with a second terminal 2b which is connected with a terminal 5a of a switch 5 which has a first output 5b and a second output 5c.

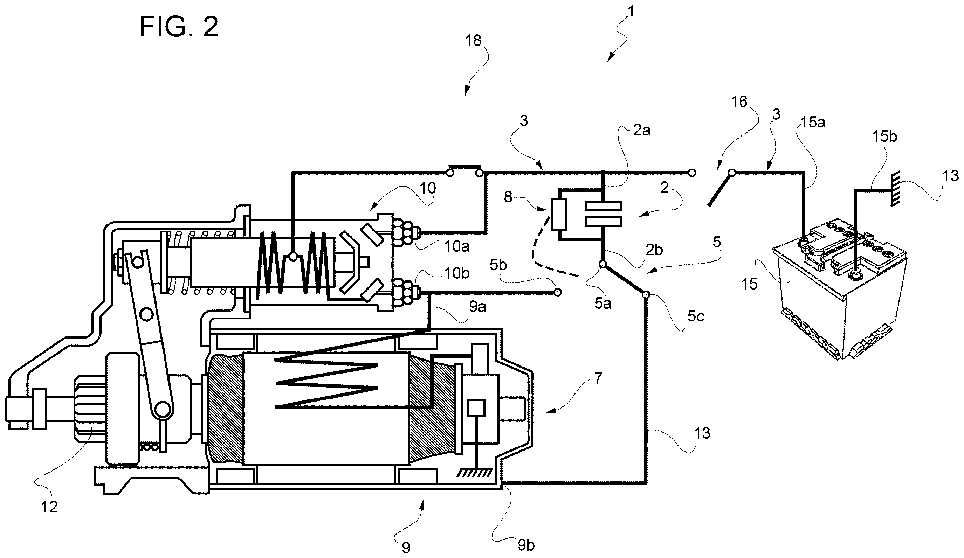

The switch 5 can be arranged in a first passive position (Figure 1) wherein the terminal 5a. is connected with the first output 5b or a second active position (Figure 2) wherein the terminal 5a is connected with the second output 5c. The switch 5 can be achieved by a power relay.

Switching of the switch 5 is carried out by a coil 8 which is connected to the terminals 2a, 2b of the supercapacitor 2; the voltage Vsc of the supercapacitor 2 is thus supplied to the terminals 2a, 2b, i.e. to the coil 8.

When the voltage Vsc is less than a threshold voltage Vss (i.e. the voltage Vsc is insufficient), the switch 5 is arranged in the first position of Figure 1. When the voltage Vsc is greater than the threshold voltage Vss (i.e. the voltage Vsc is sufficient and the supercapacitor reaches its pre-charged voltage), the switch 5 is arranged in the second position of Figure 2.

The number 7 represents a starter which comprises an electric motor 9 and a solenoid 10 which also carries out the coupling/decoupling of the pinion 12 with/from the starter ring of the internal combustion engine (the starter ring and the engine are not shown) and the opening/closing of the power terminals 10a, 10b which are used to supply the electric motor 9.

The motor 9 of the starter 7 has a first supply terminal 9a which is connected with the first output 5b and a second supply terminal 9b which is connected with a second power line (for example, a negative ground line) which is indicated with the number 13. Physically, the line 13 is formed by the vehicle's metallic structure (the vehicle is not shown), i.e. the vehicle's chassis. The starter 7 is attached to the internal combustion engine (the engine is not shown) and the internal combustion engine is connected via a braided metal cable to the chassis. Thus, an electrical connection is established between the chassis and the terminal 9b.

The terminal 10a is connected with the first line 3 and the terminal 10b is connected with the terminal 9a.

The second output 5c of the switch 5 establishes an electrical connection with the power line 13 (the chassis).

A battery 15 has a first terminal 15a which is connected with the second power line 13 (the negative line) and a second terminal 15b which is connected with the first line 3 via a switch 16, the "battery master switch". The battery 15 is sized in terms of energy rather than by power in order to meet the starting requirements. The battery 15 provides power to the vehicle's on-board electronic systems when the engine is not running. A starter switch 18 is arranged between the first power line 3 and the supply to the solenoid 10.

The switches 16 and 18 are conventional switches which are already provided on all motor vehicles.

In order to charge the supercapacitor 2 (in the initial condition, the supercapacitor 2 is assumed to be discharged
- when the capacitor is discharged it has a very low resistance) the following connections are made by the electronic control unit 25 in order to carry out a charging step (Figure 1):
   - the battery master switch 16 is closed (to initialise the various controllers);
   - the starter switch 18 is open; and
   - the switch 5 is arranged in the first position.

Thus, the first terminal 2a of the supercapacitor 2 is connected with the battery 15 via the first line 3 and the (closed) switch 16 and the second terminal 2b of the supercapacitor 2 is connected with the battery via the switch 5, the windings of the motor 9 and the ground line 13.

The charging current for the supercapacitor 2 passes via the windings of the motor 9 which is used as a load resistor; the windings of the motor 9 thus limit the flow of current from the battery 15 to the supercapacitor 2.

The motor 9 rotates idly during the charging of the supercapacitor 2, because the solenoid 10 is not powered (the switch 18 is open) and a spring 20 coupled with the solenoid 10 withdraws the pinion 12 from the starter ring.

The typical resistance of the motor windings is 1 Ohm and thus the charging current of the supercapacitor is limited to approximately 30 amps.

The resistance of the motor 9 of the starter 7 replaces a power resistor which could be used to limit the charging current of the supercapacitor 2.

In order to charge the supercapacitor 2 (min. 15 Wh) in less than 1 minute (15x60 / 30 V), a power resistor of about 1 kW (rI²) must be provided. The power resistor should thus be sized at 1 Ohm 1 kW (or greater) to support an average current of approximately 30 amps. Unfortunately, a power resistor with these characteristics / this performance (1 Ohm 1 kW) is expensive (€100 - 200). It is also difficult to arrange a power resistor inside the motor because its operating temperature is very high.

According to the invention, the charging current of the supercapacitor 2 is limited without using additional components by the windings of the motor 9, which replace the power resistor. The costs are thus reduced.

When the capacitor 2 reaches a sufficient charge level, the voltage which is supplied to the coil 8 is sufficient to achieve movement of the switch 5 which switches between the first and second positions (see Figure 2). Thus, the motor 9 stops and the (now fully charged) capacitor 2 is arranged between the first power line 3 and the second power line 13 but it is not connected to the starter 7.

The starter 7 and the supercapacitor are ready to start the engine.

In order to start the internal combustion engine (which is not shown), the switch 18 is closed (Figure 2) and the solenoid 10 is supplied with power by the supercapacitor 2.

Powering the solenoid 10 causes the pinion 12 to couple with the starter ring and the contacts 10a, 10b to be closed together.

The motor 9 is thus powered directly by the supercapacitor 2 and the starter 7 rotates, driving the internal combustion engine. Coupling of the pinion 12 with the starter ring is achieved by the solenoid 10, which compresses the spring.

The supercapacitor 2 discharges to the starter; the battery master switch 16 can be opened during this step to avoid discharging the battery 15.

The present invention achieves the following benefits:
- The battery 15 is not stressed during the starting step, thus extending its service life.
- The starter 7 is also rendered more reliable in use, as its operating time is limited by the low energy stored in the supercapacitor 2.
- The rapid discharging of the supercapacitor 2 also makes it possible to start successfully with greater reliability than with a battery, whatever the temperature.
- All the on-board electrical equipment can be simplified to avoid the impact of voltage drop when starting.
- Control is much simplified, since only a simple switching must be carried out: if the supercapacitor is discharged, the switch 5 is in the passive position of Figure 1, if the supercapacitor 2 is charged, the switch is activated (Figure 2) .

The present invention also has another significant benefit. If the battery does not have sufficient charge (for example, less than 30% of the nominal charge), it cannot provide sufficient current for starting, i.e. a high current. According to the present invention, battery's charge is transferred to the supercapacitor by line 3, which has a small cross-section (for example, 4 mm²), until the supercapacitor 2 is charged, even if the battery is discharged or not particularly powerful. When the supercapacitor 2 is charged it can produce sufficient current for starting.

In the case of buses, the battery is normally arranged in the front part of the vehicle and the starter and supercapacitor are arranged in the rear part of the vehicle; the line 3 can thus be very long, for example 12-18 metres. Use of a line with a small cross-section (between 2 and 20 mm² instead of 95 - 100 mm²) reduces the costs.

If the vehicle does not have a stop/start function, the supercapacitor 2 can remain discharged after starting and will be recharged during a reset step.

If the vehicle is equipped with a stop/start function, the supercapacitor 2 will be recharged by the alternators and kept charged.

In an embodiment not shown, the electric motor 9 which is used to limit the charging current of the supercapacitor 2 may be replaced by other electric motors, for example the electric motor of the oil pump or the electric motor of the water pump.

## Claims

1. A charging system for a supercapacitor (2) with electrical energy supplied by a battery (15), the charging system omprising switching means (5) adapted to establish a first electrical connection or a second electrical connection, wherein in the first electrical connection a first terminal (2a) of the supercapacitor (2) is connected with a first terminal (15-a) of the battery and a second terminal (2-b) of the supercapacitor (2) is connected with a second terminal (15b) of the battery (15) via the windings of an electric motor (9); said windings being used as load resistors in order to limit the current supplied by the battery (15) to the supercapacitor (2); and in the second electrical connection the terminals (2a and 2b) of the supercapacitor (2) are connected with the supply terminals (9a and 9b) of the electric motor (9) which is supplied with the current that is produced by the supercapacitor (2) that discharges.

2. The charging system for a supercapacitor (2) according to claim 1, wherein said electric motor (9) is the electric motor (9) of the starter (7); said starter (7) rotates idly during the charging step of the supercapacitor (2) since the starter does not start the internal combustion engine; in the second electrical connection said motor (9) is supplied with the current that is produced by the supercapacitor (2) that discharges in order to achieve a starting step of the internal combustion engine.

3. The system according to claim 2, wherein a coil (8), that switches the switching means (5) is connected with terminals (2a, 2b) of the supercapacitor (2) in order to supply the voltage Vsc of the supercapacitor (2) to said terminals (2a, 2b); the switching means (5) are disposed in a first position when the voltage Vsc is less than a threshold voltage Vss and when the voltage Vsc is greater than the threshold voltage Vss the switching means (5) are disposed in second position.

4. The charging system according to claim 2 or 3, wherein a first switch (16), a battery master switch, is arranged between the first terminal of the supercapacitor (2a) and the first terminal (15a) of the battery; said first switch (16) is closed during the charging of the supercapacitor (2).

5. The charging system according to claim 2, 3 or 4, wherein a second starter switch (18) is arranged between the first terminal (2a) of the supercapacitor (2) and the supply of a solenoid (10) that couples/uncouples the pinion (12) with/from the starter ring of the internal combustion engine and the opening/closing of the power terminals (10a, 10b) which are used to supply power to the electric motor (9); a first power terminal (10a) is connected with the first terminal (2a) of the supercapacitor (2) and a second power terminal (10b) is connected with the first supply terminal (9a) of the motor.

6. The charging system according to claim 2, 3, 4 or 5 wherein said first terminal (2a) of the supercapacitor is connected with a low-power line (3) which is also connected with said first terminal (15a) of the battery; the low-power line (3) is implemented with a cable that has a section ranging between 2 and 20 mm².

7. A method for charging a supercapacitor (2) with electrical energy supplied by a battery (15) and for supplying the energy of the supercapacitor to a motor, the method comprising the following steps: charging the supercapacitor by establishing a first electrical connection wherein a first terminal (2a) of the supercapacitor (2) is connected with a first terminal (15a) of the battery and a second terminal (2b) of the supercapacitor (2) is connected with a second terminal (15b) of the battery via the windings of an electric motor (9); said windings being used as load resistor in order to limit the current supplied by the battery (15) to the supercapacitor (2); supplying the energy of the supercapacitor to the motor by establishing a second electrical connection wherein the terminals (2a and 2b) of the supercapacitor (2) are connected with the respective supply terminals (10a and 10b) of the motor (9) which is supplied with the current produced by the supercapacitor (2) which discharges.

8. The method according to claim 6, wherein said electric motor (9) is the electric motor (9) of the starter (7); said starter (7) rotates idly during the charging step of the supercapacitor (2) since the starter does not start the internal combustion engine; in the second electrical connection said motor (9) is supplied with the current that is produced by the supercapacitor (2) that discharges to achieve a starting step of the internal combustion engine.

## Patentansprüche

1. Ladesystem zum Laden eines Superkondensators (2) mit von einer Batterie (15) bereitgestellter elektrischer Energie, wobei das Ladesystem umfasst:
Schaltmittel (5), ausgeführt, um eine erste elektrische Verbindung oder eine zweite elektrische Verbindung herzustellen, wobei bei der ersten elektrischen Verbindung ein erster Anschluss (2a) des Superkondensators (2) mit einem ersten Anschluss (15a) der Batterie verbunden wird und zweiter Anschluss (2b) des Superkondensators (2) über die Windungen eines Elektromotors (9) mit einem zweiten Anschluss (15b) der Batterie (15) verbunden wird, wobei die Windungen als Lastwiderstände genutzt werden, um den Strom, welcher dem Superkondensator (2) von der Batterie (15) zugeführt wird, zu begrenzen;
und wobei bei der zweiten elektrischen Verbindung die Anschlüsse (2a und 2b) des Superkondensators (2) mit den Versorgungsanschlüssen (9a und 9b) des Elektromotors (9), welcher mit dem Strom versorgt wird, der vom sich entladenden Superkondensator (2) produziert wird , verbunden werden.

2. Ladesystem für einen Superkondensator (2) nach Anspruch 1, wobei der Elektromotor (9) der Elektromotor (9) des Anlassers (7) ist; wobei der Anlasser (7) während des Ladeschrittes des Superkondensators (2) c, da der Anlasser den Verbrennungsmotor nicht anlässt; wobei bei der zweiten elektrischen Verbindung der Motor (9) mit dem Strom versorgt wird, der vom sich entladenden Superkondensator (2) produziert wird, um einen Startschritt des Verbrennungsmotors zu erzielen.

3. Ladesystem nach Anspruch 2, wobei eine Spule (8), welche die Schaltmittel (5) schaltet, mit den Anschlüssen (2a, 2b) des Superkondensators (2) verbunden ist, um die Anschlüsse (2a, 2b) mit der Spannung Vsc des Superkondensators (2) zu versorgen; wobei die Schaltmittel (5) in einer ersten Position angeordnet sind, wenn die Spannung Vsc kleiner als eine Schwellenwertspannung Vss ist, und wenn die Spannung Vsc größer ist als die Schwellenwertspannung Vss, die Schaltmittel (5) in einer zweiten Position angeordnet sind.

4. Schaltsystem nach einem der Ansprüche 2 oder 3, wobei ein erster Schalter (16), der ein Batteriehauptschalter ist, zwischen dem ersten Anschluss (2a) des Superkondensators und dem ersten Anschluss (15a) der Batterie angeordnet ist, wobei der erste Schalter (16) während des Ladens des Superkondensators (2) geschlossen ist.

5. Ladesystem nach einem der Ansprüche 2, 3 oder 4, wobei ein zweiter Anlassschalter (18) zwischen dem ersten Anschluss (2a) des Superkondensators (2) und der Versorgung eines Magnetschalters (10) angeordnet ist, welcher Magnetschalter das Antriebsritzel (12) mit/von dem Anlasserzahnkranz des Verbrennungsmotors koppelt/entkoppelt und welcher die Stromanschlüsse (10a, 10b), die genutzt werden, um den Elektromotor (9) mit Strom zu versorgen, öffnet/schließt; wobei ein erster Stromanschluss (10a) mit dem ersten Anschluss (2a) des Superkondensators (2) verbunden ist und ein zweiter Versorgungsanschluss (10b) mit dem ersten Versorgungsanschluss (9a) des Motors verbunden ist.

6. Ladesystem nach einem der Anschlüsse 2, 3, 4 oder 5, wobei der erste Anschluss (2a) des Superkondensators (2) mit einer Niederstromleitung (3) verbunden ist, die auch mit dem ersten Anschluss (15a) der Batterie verbunden ist; wobei die Niederstromleitung (3) mit einem Kabel ausgeführt ist, das einen Querschnitt zwischen 2 und 20 mm² hat.

7. Verfahren zur Ladung eines Superkondensators (2) mit von einer Batterie (15) bereitgestellten elektrischen Energie und zur Versorgung eines Motors mit der Energie des Superkondensators, wobei das Verfahren die folgenden Schritte umfasst:
Laden des Superkondensators durch Herstellen einer ersten elektrischen Verbindung, bei der ein erster Anschluss (2a) des Superkondensators (2) mit einem ersten Anschluss (15a) der Batterie verbunden wird und ein zweiter Anschluss (2b) des Superkondensators (2) mit einem zweiten Anschluss (15b) der Batterie mittels der Windungen eines Elektromotors (9) verbunden wird; wobei die Windungen als Lastwiderstand genutzt werden, um den Strom, welcher dem Superkondensator (2) von der Batterie (15) zugeführt wird, zu begrenzen;
Versorgen des Motors mit der Energie des Superkondensators durch Herstellen einer zweiten elektrischen Verbindung, bei der die Anschlüsse (2a und 2b) des Superkondensators (2) mit den jeweiligen Versorgungsanschlüssen (10a und 10b) des Motors (9) verbunden werden, der mit dem beim Entladen des Superkondensators (2) produzierten Strom betrieben wird.

8. Verfahren nach Anspruch 6, wobei der Elektromotor (9) der Elektromotor (9) des Anlassers (7) ist; wobei der Anlasser (7) während des Ladeschrittes des Superkondensators (2) im Leerlauf dreht, da der Anlasser den Verbrennungsmotor nicht anlässt; wobei bei der zweiten elektrischen Verbindung der Motor (9) mit dem Strom versorgt wird, der vom sich entladenden Superkondensator (2) produziert wird, um einen Startschritt des Verbrennungsmotors zu erzielen.

## Revendications

1. Système de recharge pour un super-condensateur (2) au moyen d'énergie électrique fournie en tant qu'alimentation par une batterie (15), le système de recharge comprenant un moyen de commutation (5) qui est adapté pour établir une première connexion électrique ou une seconde connexion électrique, dans lequel, dans le cas de la première connexion électrique, une première borne (2a) du super-condensateur (2) est connectée à une première borne (15a) de la batterie et une seconde borne (2b) du super-condensateur (2) est connectée à une seconde borne (15b) de la batterie (15) via les enroulements d'un moteur électrique (9) ; lesdits enroulements étant utilisés en tant que résistances de charge pour limiter le courant qui est fourni en tant qu'alimentation par la batterie (15) au super-condensateur (2) ; et dans le cas de la seconde connexion électrique, les bornes (2a et 2b) du super-condensateur (2) sont connectées avec les bornes d'alimentation (9a et 9b) du moteur électrique (9) qui est alimenté au moyen du courant qui est produit par le super-condensateur (2) qui réalise une décharge.

2. Système de recharge pour un super-condensateur (2) selon la revendication 1, dans lequel ledit moteur électrique (9) est le moteur électrique (9) du démarreur (7) ; ledit démarreur (7) tourne au ralenti pendant l'étape de recharge du super-condensateur (2) puisque le démarreur ne démarre pas le moteur à combustion interne ; dans le cas de la seconde connexion électrique, ledit moteur (9) est alimenté au moyen du courant qui est produit par le super-condensateur (2) qui réalise une décharge afin de réaliser une étape de démarrage du moteur à combustion interne.

3. Système selon la revendication 2, dans lequel une bobine (8), qui commute le moyen de commutation (5), est connectée avec des bornes (2a, 2b) du super-condensateur (2) afin de fournir en tant qu'alimentation la tension Vsc du super-condensateur (2) sur lesdites bornes (2a, 2b) ; le moyen de commutation (5) est disposé dans une première position lorsque la tension Vsc est inférieure à une tension de seuil Vss et lorsque la tension Vsc est supérieure à la tension de seuil Vss, le moyen de commutation (5) est disposé dans une seconde position.

4. Système de recharge selon la revendication 2 ou 3, dans lequel un premier commutateur (16), soit un commutateur maître de batterie, est agencé entre la première borne (2a) du super-condensateur et la première borne (15a) de la batterie ; ledit premier commutateur (16) est fermé pendant la recharge du super-condensateur (2).

5. Système de recharge selon la revendication 2, 3 ou 4, dans lequel un second commutateur de démarreur (18) est agencé entre la première borne (2a) du super-condensateur (2) et l'alimentation d'un électroaimant (10) qui couple/découple le pignon (12) vis-à-vis de la couronne de démarreur du moteur à combustion interne et de l'ouverture/la fermeture des bornes d'alimentation en énergie électrique (10a, 10b) qui sont utilisées pour alimenter en énergie électrique le moteur électrique (9) ; une première borne d'alimentation en énergie électrique (10a) est connectée avec la première borne (2a) du super-condensateur (2) et une seconde borne d'alimentation en énergie électrique (10b) est connectée avec la première borne d'alimentation en énergie électrique (9a) du moteur.

6. Système de recharge selon la revendication 2, 3, 4 ou 5, dans lequel ladite première borne (2a) du super-condensateur est connectée avec une ligne de faible puissance (3), laquelle est également connectée à ladite première borne (15a) de la batterie ; la ligne de faible puissance (3) est mise en œuvre à l'aide d'un câble qui présente une section qui s'inscrit à l'intérieur d'une plage entre 2 et 20 mm².

7. Procédé pour recharger un super-condensateur (2) au moyen d'énergie électrique fournie en tant qu'alimentation par une batterie (15) et pour fournir en tant qu'alimentation l'énergie du super-condensateur à un moteur, le procédé comprenant les étapes qui suivent : le rechargement du super-condensateur en établissant une première connexion électrique, dans lequel une première borne (2a) du super-condensateur (2) est connectée à une première borne (15a) de la batterie et une seconde borne (2b) du super-condensateur (2) est connectée à une seconde borne (15b) de la batterie (15) via les enroulements d'un moteur électrique (9) ; lesdits enroulements étant utilisés en tant que résistance de charge pour limiter le courant qui est fourni en tant qu'alimentation par la batterie (15) au super-condensateur (2) ; et la fourniture de l'énergie du super-condensateur au moteur en établissant une seconde connexion électrique, dans lequel les bornes (2a et 2b) du super-condensateur (2) sont connectées avec les bornes d'alimentation respectives (10a et 10b) du moteur électrique (9) qui est alimenté au moyen du courant qui est produit par le super-condensateur (2) qui réalise une décharge.

8. Procédé selon la revendication 6, dans lequel ledit moteur électrique (9) est le moteur électrique (9) du démarreur (7) ; ledit démarreur (7) tourne au ralenti pendant l'étape de recharge du super-condensateur (2) puisque le démarreur ne démarre pas le moteur à combustion interne ; dans le cas de la seconde connexion électrique, ledit moteur (9) est alimenté au moyen du courant qui est produit par le super-condensateur (2) qui réalise une décharge afin de réaliser une étape de démarrage du moteur à combustion interne.
